# EUROPÄISCHE PATENTSCHRIFT

(11) **EP 1 921 957 B1**
(45) Veröffentlichungstag und Bekanntmachung des Hinweises auf die Patenterteilung: **27.05.2009**
(21) Anmeldenummer: 06792826.7
(22) Anmeldetag: 16.08.2006
(51) Int. Cl.: A47J 43/07

(54) **KÜCHENGERÄT MIT EINER MAGNETISCHEN SICHERHEITSVERRIEGELUNG**
KITCHEN APPLIANCE COMPRISING A MAGNETIC SAFETY LOCK
APPAREIL DE CUISINE EQUIPE D'UN VERROUILLAGE DE SECURITE MAGNETIQUE

(30) Priorität: 26.08.2005 DE 102005040513
(43) Veröffentlichungstag der Anmeldung: 21.05.2008
(73) Patentinhaber: BSH Bosch und Siemens Hausgeräte GmbH, 81739 München (DE)
(72) Erfinder: RUDEZ, Darko, 3230 Sentjur (SI); MAK, Marjan, 3303 Gomilsko (SI); PESEC, Jurij, 3301 Petrovce (SI)
(86) Internationale Anmeldenummer: PCT/EP2006/065339
(87) Internationale Veröffentlichungsnummer: WO 2007/023116

(56) Entgegenhaltungen:
- EP-A1- 0 440 051
- DE-A1- 3 121 252
- US-A- 4 741 482

## Beschreibung

Die Erfindung betrifft ein Küchengerät, insbesondere ein elektromotorisches Küchengerät, vorzugsweise eine elektromotorische Solo- oder Universalküchenmaschine, umfassend einen Einschalter und eine dem Einschalter zugeordnete Sicherheitsverriegelung, die den Einschalter nur dann entriegelt und ein Betrieb des Küchengeräts zulässt, wenn das Küchengerät ordnungsgemäß zusammengebaut ist, wobei die Sicherheitsverriegelung mindestens einen Magnetschalter mit mindestens einem Magneten und mit mindestens einem Magnetsensor aufweist.

DE 691 01 451 T1 betrifft ein elektrisches Küchengerät mit mehreren Funktionen zum Bearbeiten von Lebensmitteln mit einer elektrischen Steuervorrichtung zum Einschalten des Motors, welche eine Detektor-Vorrichtung zur Feststellung der Anwesenheit eines Deckels auf einer Arbeitsschüssel aufweist. Die Detektor-Vorrichtung dient dazu, eine richtige Schließstellung des Küchengeräts zu überwachen sowie die richtige Arbeitsgeschwindigkeit in Abhängigkeit eines angeschlossenen Werkzeugs einzustellen. Die Detektorvorrichtung weist zur Feststellung der Anwesenheit einer Arbeitsschüssel bzw. eines Deckels einen Hall-Sensor auf, mit dem das Magnetfeld eines Magneten erfasst werden kann.

Aus der DE 31 21 252 ist ein Mehrzweck-Haushaltsgerät mit mehreren austauschbaren Nahrungsmittel-Zubereitungswerkzeugen und einer abnehmbaren Schale bekannt, welches eine magnetisch wirkende Sicherheitsblockierung umfasst, mit der eine ordnungsgemäße Positionierung der Schale in dem Haushaltsgerät überwacht wird. Fehler der magnetischen Blockiervorrichtung werden vermieden, indem alternierende magnetische Flüsse verwendet werden.

Schließlich ist aus der US 4.741.482 A ein Küchengerät offenbart, welches eine Sicherheitseinrichtuna aufweist. Die Einrichtung umfasst einen Sensor, der erkennen kann, ob das Küchengerät betriebsgemäß zusammengebaut ist so dass ein sicherer Betrieb erfolgen kann. Der Sensor ist ein Maanetfeldsensor.

Es ist Aufgabe der vorliegenden Erfindung, ein Küchengerät, insbesondere ein elektromotorisches Küchengerät, bzw. ein die Sicherheitsfunktion des Küchengeräts unterstützendes Werkzeug bereitzustellen, womit ein besonders hohes Maß an Sicherheit und Zuverlässigkeit im Betrieb erreicht wird.

Diese Aufgabe wird erfindungsgemäß durch das Küchengerät wie in dem unabhängigen Anspruch 1 angegeben gelöst. Weitere vorteilhafte Einzelheiten und Weiterbildungen, die jeweils einzeln angewandt oder beliebig miteinander kombiniert werden können, sind Gegenstand der abhängigen Ansprüche.

Weitere vorteilhafte Einzelheiten und Ausgestaltungen, die jeweils angewandt oder beliebig miteinander kombiniert werden können, werden anhand der folgenden Zeichnung, welche die Erfindung nicht einschränken, sondern lediglich exemplarisch illustrieren soll, näher erläutert.

Es zeigen schematisch:
- Fig. 1: ein Küchengerät in einer perspektivischen Ansicht von oben. Diese Ausführungsform fällt nicht in den Schutzbereich der Ansprüche.
- Fig. 2: einen in ein Küchengerät eingesetzten Mixerbehälter des Küchengeräts im Längsschnitt mit eingesetztem Behälterdeckel. Diese Ausführungsform fällt nicht in den Schutzbereich der Ansprüche.
- Fig. 3: einen in ein Küchengerät eingesetzten Mixerbehälter im Längsschnitt ohne eingesetztem Bahälterdeckel. Diese Ausführungsform fällt nicht in den Schutzbereich der Ansprüche.
- Fig. 4: eine Ausführungsform eines Magnetschalters eines erfindungsge- mäßen Küchengeräts im geöffneten Zustand im Querschnitt;
- Fig. 5: den Magnetschalter nach Fig. 4 im zusammengebauten Zustand des Küchengeräts; und
- Fig. 6: eine weitere Ausführungsform des Magnetschalters eines Küchengeräts im zusammengebauten Zustand des Küchengeräts. Diese Ausführungsform-fällt nicht in den Schutzbereich der Ansprüche.

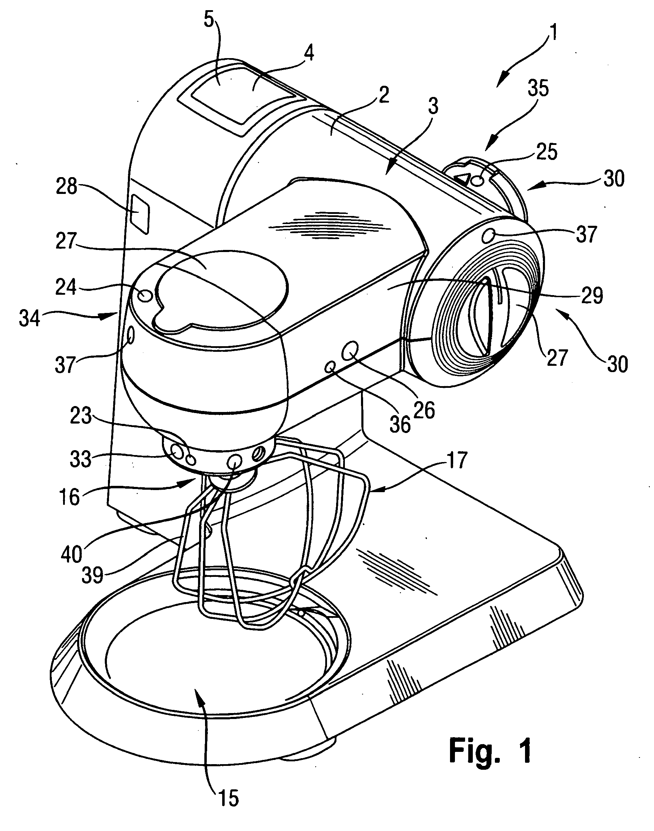

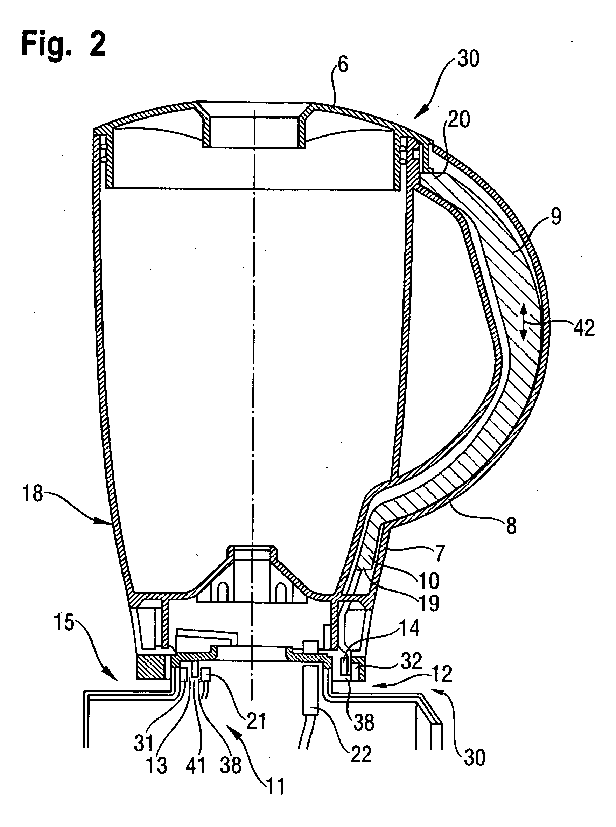

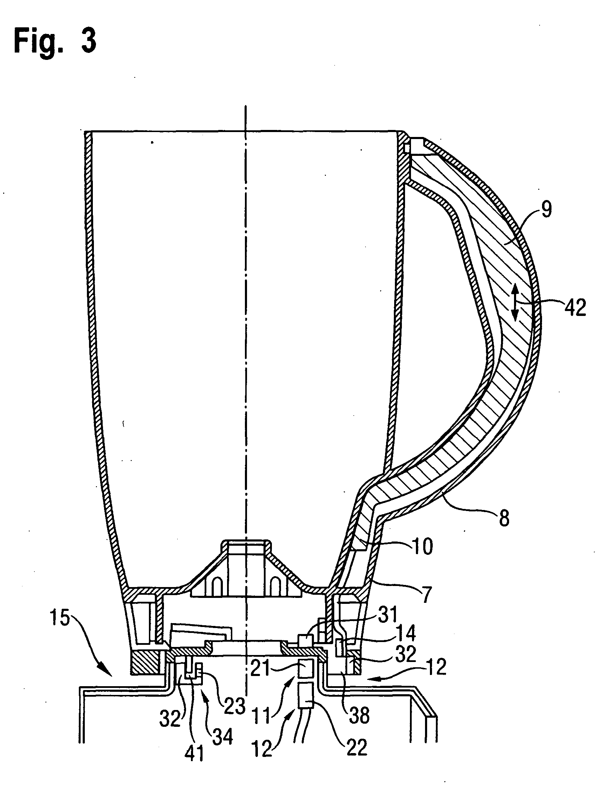

Fig. 1 zeigt ein Küchengerät 1 mit einem Gerätegehäuse 2, welches einen Elektromotor 3 aufweist, der mit einem Einschalter 4 eingeschaltet werden kann. Der Einschalter 4 ist erst dann wirksam bzw. erst dann aktivierbar, wenn er durch eine Sicherheitsverriegelung 5 freigegeben ist. Mit Hilfe der Sicherheitsverriegelung 5 wird sichergestellt, dass ein als Rührbesen 39 ausgestaltetes erstes Werkzeug 17 bzw. ein als Mixerbehälter 7 ausgestaltetes zweites Werkzeug 18 (siehe Fig. 2 und 3) ordnungsgemäß in das Küchengerät 1 eingesetzt ist. Mit der Sicherheitsverriegelung 5 wird auch sichergestellt, dass ein Behälterdeckel 6 für den Mixerbehälter 7 (s. Fig. 2 und 3) ordnungsgemäß verschlossen ist. Nachdem die Sicherheitsverriegelung 5 erkannt hat, dass das Küchengerät 1 vollständig zusammengebaut wurde bzw. die Werkzeuge 17, 18 ordnungsgemäß angeschlossen wurden, wird der Einschalter 4 aktiviert, so dass erst zu diesem Zeitpunkt der Elektromotor 3 bzw. das Küchengerät 1 in Betrieb genommen werden kann. Hierdurch wird die Sicherheit bei der Verwendung des Küchengeräts 1 erheblich gesteigert. Das Küchengerät 1 weist eine erste 15, zweite 16 und eine dritte 27 Werkzeugkupplung auf, welche von entsprechenden Magnetsensoren 21-26 (s. a. Fig. 2 und 3) überwacht werden. Beispielsweise wird die zweite Werkzeugkupplung 16 mit Hilfe eines dritten Magnetschalters 33, der einen dritten Magnetsensor 23 aufweist, überwacht. Eine dritte Werkzeugkupplung 27 wird mit Hilfe eines Sensors 37, der als vierter Magnetsensor 24 ausgestaltet sein kann, überwacht. Der vierte Magnetsensor 24 ist einem vierten Magnetschalter 34 zugeordnet, mit dem ein vollständiges Verschließen der dritten Werkzeugkupplung 27 überwacht wird. Die, Magnetschalter 11, 12, 33-36 bzw. die Magnetsensoren 21-26 sind so beschaffen bzw. an den jeweiligen Werkzeugkupplungen 17, 18, 27 derart angeordnet, dass sie erst dann betätigt werden können, wenn eine von diesem Magnetschalter 11, 12, 33-36 zu überwachende Schnittstelle 30 vollständig funktionstüchtig, abgesichert bzw. verschlossen ist. Das Küchengerät 1 weist einen Gerätegehäusedeckel 29 auf, mit dem das Gerätegehäuse 2 geöffnet werden kann. Auch der Gerätegehäusedeckel 29 wird mit Hilfe eines Magnetschalters 36 und eines sechsten Magnetsensors 26 überwacht. Die erste Werkzeugkupplung 15 ist dazu geeignet und bestimmt, einen Mixerbehälter 7 sicher aufzunehmen. Ein Werkzeugtypsensor 40 an dem Küchengerät 1 erfasst den Typ des eingesetzten Werkzeugs 17 und eine Gerätesteuerung 28 steuert den Elektromotor 3 entsprechend an, wobei insbesondere die Geschwindigkeit des Werkzeugs 17 geeignet gewählt wird. Ein fünfter Magnetsensor 25 überwacht als Teil eines weiteren Magnetschalters 35 die Schnittstelle 30, welche zur Aufnahme einer Getreidemühle (nicht dargestellt) geeignet ist. Durch die Verwendung der Vielzahl von Magnetschaltern 11, 12, 33-36 bzw. der Magnetsensoren 21-26 wird ein Betriebszustand des Küchengeräts 1 sicherheitstechnisch und funktionstechnisch im Wesentlichen vollständig erfasst. Die Magnetsensoren 21-26 sind als Reed-Sensoren vorgesehen.

Fig. 2 zeigt einen Mixerbehälter 7 des Küchengeräts 1 im Längsschnitt mit einem Behältergriff 8. Mit Hilfe eines in dem Behältergriff 8 zwischen einer ersten und einer zweiten Position hin- und her beweglichen Gestänges 9, welches als Koppelstange 10 ausgestaltet ist, wird die Schnittstelle 30 an einem Behälterdeckel 6 überwacht, indem das Gestänge 9 bei ordnungsgemäß eingesetztem Behälterdeckel 6 auf einen zweiten Schaltschieber 14 drückt, der dadurch in einen Zwischenraum 38 zwischen einem zweiten Magnetsensor 22 und einen am Mixerbehälter 7 angeordneten zweiten Magneten 32 geschoben wird. Der zweite Schaltschieber 14 ist aus einem ferromagnetischen Material gefertigt und lenkt das von dem zweiten Magneten 32 erzeugte magnetische Feld auf den zweiten Magnetsensor 22, der dann ein entsprechendes Signal an die Gerätesteuerung 28 liefert. Der Schaltschieber 14 kann ein quaderförmiger Block aus Eisen sein. An der ersten Werkzeugkupplung 15 ist darüber hinaus ein erster Magnetschalter 11 angeordnet, mit dem ein ordnungsgemäßes Einsetzen des Mixerbehälters 7 in die erste Werkzeugkupplung 15 überwacht wird, indem ein erster Schaltschieber in einen Zwischenraum 38 zwischen einem ersten Magnetsensor 21 und einem ersten Magnet 31 eingeschoben wird, so dass das von dem ersten Magnet 31 erzeugte Magnetfeld auf den ersten Magnetsensor gelenkt wird, so dass dieser ein ordnungsgemäßes Verbinden des Mixerbehälters 7 mit der ersten Werkzeugkupplung 15 anzeigt. Der erste Magnetschalter 11 weist eine Vertiefung 41 auf, in welche der erste Schaltschieber 13 eingreifen muss, um den ersten Magnetschalter 11 zu betätigen. Der Behälterdeckel 6 gelangt an einem deckelseitigen Ende 20 des Gestänges 9 mit dem Gestänge 9 in mechanischen Eingriff. Das Gestänge 9 bewegt sich entlang einer Bewegungsrichtung 42 zwischen einer ersten und einer zweiten Position hin und her und positioniert somit einen zweiten Schaltschieber 14 eines zweiten Magnetschalters 12 in einen Zwischenraum 38 zwischen einem zweiten Magnet 32 und einem zweiten Magnetsensor 22. Der zweite Magnetschalter 12 ist an der Schnittstelle 30 angeordnet.

Fig. 3 zeigt einen Mixerbehälter 7 ohne Behälterdeckel 6 im Längsschnitt. Man erkennt, dass der zweite Schaltschieber nicht in dem Zwischenraum 38 angeordnet ist, so dass der zweite Magnetschalter 12 mit dem zweiten Magnetsensor 22 und dem zweiten Magnet 32 nicht geschlossen ist. Folglich kann das Küchengerät 1 nicht in Betrieb genommen werden. Ein vierter Magnetschalter 34 weist einen Magneten 32 auf, der den ersten Magnetsensor 21 bei einem ordnungsgemäß in die Werkzeug kupplung 15 eingesetzten Mixerbehälter 7 betätigt. Ein weiterer Magnetschalter 33 ist an der ersten Werkzeugkupplung 15 vorgesehen. Der weitere Magnetsensor umfasst eine Vertiefung 41, in der ein dritter Magnetsensor 23 angeordnet ist und in die der zugeordnete zweite Magnet 32 eingreift. Durch die Vertiefung wird der dritte Magnetsensor 23 von dem Einfluss von externen Magneten (nicht dargestellt) geschützt, da diese hierdurch von dem dritten Magnetsensor 23 hinreichend weit beabstandet werden. Hierdurch wird die Sicherheit der Überwachung und die Funktionszuverlässigkeit der Sicherheitsregelung 5 weiter gesteigert.

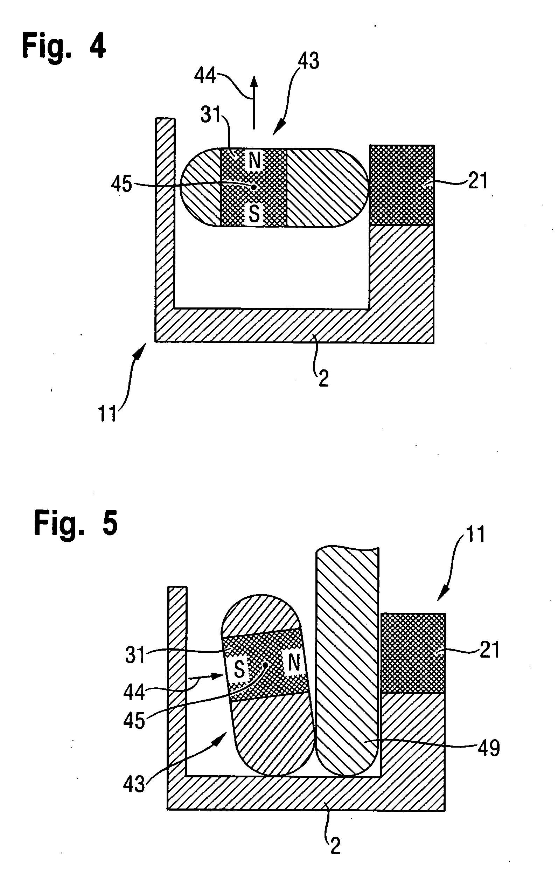

Fig. 4 zeigt eine Ausführungsform eines Magnetschalters 11 eines erfindungsgemäßen Küchengeräts 1 im geöffneten Zustand im Querschnitt, wobei ein Mittel 43 zur Beeinflussung des Magnetfelds durch die Drehbarkeit des Magneten 31 gegeben ist. Der Magnet 31, dessen Polarität Nord (N)- Süd (S) durch die Nord-Süd-Richtung 44 gegeben ist, ist ortsfest und drehbar um eine Achse 45 an dem Gerätegehäuse 2 gelagert. Im geöffneten Zustand des Magnetschalters 11 ist die Nord-Süd-Richtung 44 tangential zu konzentrischen Kreisen, deren Zentrum mit dem Magnetsensor 21 zusammenfällt.

Fig. 5 zeigt den Magnetschalter 11 nach Fig. 4 im zusammengebauten Zustand des Küchengeräts 1, wobei ein Mixerbehälterabschnitt 49 eines Mixerbehälters 7 in den Magnetschalter 11 eingreift und den Magneten 31 mit seiner Nord-Süd-Richtung 44 um die Achse 45 derart dreht, dass der eine Pol (N) des Magneten 31 in die Nähe des Magnetsensors 21 gelangt. Hierdurch übersteigt das Magnetfeld des Magneten 31 am Magnetsensor 21 einen bestimmten Wert und ein Schaltvorgang wird auslöst.

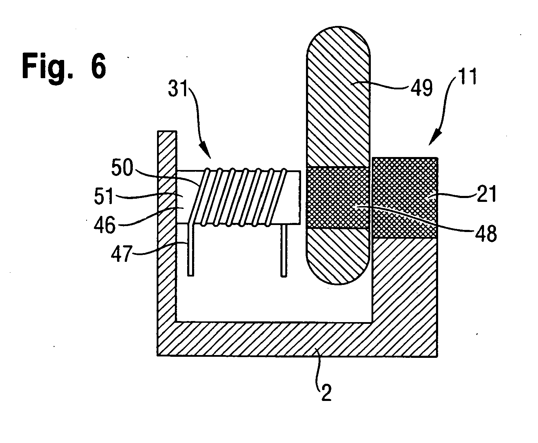

Fig. 6 zeigt eine weitere Ausführungsform des Magnetschalters 11 eines Küchengeräts 1 im zusammengebauten Zustand des Küchengeräts 1, wobei ein Mixerbehälterabschnitt 49 eines Mixerbehälters 7 in den Magnetschalter 11 eingreift. Hierbei besteht der Magnet 31 aus einem ersten Einzelmagnet 46, der als Permanentmagnet 51 ausgestaltet ist, und einem zweiten Einzelmagnet 47, der durch einen um den Permanentmagneten 52 gewickelten Elektromagnet 50 gebildet ist. Durch den Elektromagneten 50 kann auf das am Magnetsensor 21 wirkende Magnetfeld Einfluss genommen werden. Der Mixerbehälterabschnitt 49 weist ein magnetisierbares Material 48 auf, durch welches das Magnetfeld des zusammengesetzten Magneten 31 auf den Magnetsensor 21 gelenkt und dort konzentriert wird.

Im Folgenden werden verschiedene weitere Aspekte, die mit der Erfindung in einem Zusammenhang stehen, beschrieben. Die einzelnen Aspekte können jeweils einzeln angewandt, d.h. unabhängig voneinander, oder beliebig miteinander kombiniert werden:

Ein besonders vorteilhaftes Küchengerät 1, insbesondere elektromotorisches Küchengerät 1, vorzugsweise elektromotorische Solo- oder Universalküchenmaschine, kann einen Einschalter 4 und eine dem Einschalter 4 zugeordnete Sicherheitsverriegelung 5 umfassen, die nur dann den Einschalter 4 entriegelt und einen Betrieb des Küchengeräts 1 zulässt, wenn das Küchengerät 1 ordnungsgemäß zusammengebaut ist, und ist dadurch gekennzeichnet, dass die Sicherheitsverriegelung 5 mindestens vier, vorzugsweise mindestens sechs, separate Magnetschalter 11, 12, 33 - 36 mit Magnetsensoren 21 - 26, insbesondere Reed-Sensoren, aufweist. Insbesondere ist mindestens ein Magnetschalter 11, 12, 33 - 36 mit mindestens einem Magnetsensor 21 - 26 vorgesehen, wobei der Magnetsensor 21 -26 ein Reed-Sensor ist. In einer Ausgestaltung weist das Küchengerät 1 mindestens einen ansteckbaren Mixerbehälter 7 auf, der mit einer ersten Werkzeugkupplung 15 mit dem Küchengerät 1 verbindbar ist, wobei an der ersten Werkzeugkupplung 15 ein erster Magnetsensor 21 für die Überwachung einer ordnungsgemäßen Verbindung des Mixerbehälters 7 mit dem Küchengerät 1 vorgesehen ist. In einer weiteren Ausgestaltung weist der Mixerbehälter 7 einen Behälterdeckel 6 auf und ein zweiter Magnetsensor 22 ist für die Überwachung eines ordnungsgemäßen Schließens des Mixerbehälters 7 mit dem Behälterdeckel 6 vorgesehen. Der zweite Magnetsensor 22 kann an der ersten Werkzeugkupplung 15, vorzugsweise am Küchengerät 1, angeordnet sein, wobei insbesondere an dem Mixerbehälter 7, insbesondere in einem an dem Mixerbehälter 7 vorgesehenen Behältergriff 8, ein zwischen einer ersten Position und einer zweiten Position hin und her bewegliches Gestänge 9, insbesondere eine Koppelstange 10, vorgesehen ist, welches derart mit dem Behälterdeckel 6 in Eingriff gelangt, dass das Gestänge 9 bei ordnungsgemäß geschlossenem Behälterdeckel 6 die erste Position und sonst die zweite Position einnimmt, wobei mit Hilfe des Gestänges 9 der zweite Magnetsensor 2 betätigbar ist. In einer Weiterbildung weist das Küchengerät 1 mindestens ein ansteckbares erstes Werkzeug 17, insbesondere ein Pürier-, Misch-, Häcksel-, Knet- und/oder Schneidwerk, Schlag- bzw. Rührbesen 39, Getränkemixer, Durchlaufschnitzler, Getreidemühle, Zitrus- bzw. Fruchtpresse und/oder Fleischwolf, auf, das mit einer zweiten Werkzeugkupplung 16 mit dem Küchengerät 1 verbindbar ist, wobei an der zweiten Werkzeug kupplung 16 ein dritter Magnetsensor 23 für die Überwachung einer ordnungsgemäßen Verbindung des ersten Werkzeugs 17 mit dem Küchengerät 1 vorgesehen ist. In einer weiteren Weiterbildung weist das Küchengerät 1 mindestens ein ansteckbares zweites Werkzeug 18, insbesondere ein Pürier-, Misch-, Häcksel-, Knet- und/oder Schneidwerk, Schlag- bzw. Rührbesen 39, Getränkemixer, Durchlaufschnitzler, Getreidemühle, Zitrus- bzw. Fruchtpresse und/oder Fleischwolf, auf, das mit einer dritten Werkzeugkupplung 27 mit dem Küchengerät 1 verbindbar ist, wobei an der dritten Werkzeugkupplung 27 ein vierter Magnetsensor 24 für die Überwachung einer ordnungsgemäßen Verbindung des zweiten Werkzeugs 18 mit dem Küchengerät 1 vorgesehen ist. Vorteilhafterweise weist das Küchengerät 1 mehrere, insbesondere mindestens 3, Werkzeugkupplungen 15, 16, 27 für verschiedene Werkzeuge 17, 18, insbesondere Pürier-, Misch-, Häcksel-, Knet- und/oder Schneidwerke, Mixerbehälter 7 und/oder Fleischwolf, auf und jeder Werkzeugkupplung 15, 16, 27 ist mindestens ein Magnetsensor 21- 26 zugeordnet. In einer weiteren Weiterbildung kann mindestens ein Magnetsensor 21- 26, insbesondere können mindestens 2, vorteilhafterweise ein überwiegender Anteil der, Magnetsensoren 21- 26 den Typ des eingesetzten Werkzeugs 17, 18 identifizieren. Insbesondere umfasst das Küchengerät 1 eine Gerätesteuerung 28, welche die Betriebsweise des Küchengeräts 1, insbesondere die Geschwindigkeit und/oder Leistungsstufe eines Elektromotors 3, entsprechend der Identifizierung beeinflusst. In einer weiteren Ausgestaltung weist das Küchengerät 1 ein Gerätegehäuse 2 und einen Gerätegehäusedeckel 29 auf und ein fünfter Magnetsensor 5 ist für die Überwachung eines ordnungsgemäßen Schließens des Gerätegehäuses 2 mit dem Gerätegehäusedeckel 29 vorgesehen. In einer Weiterbildung sind die Magnetschalter 11, 12, 33 - 36 bzw. die Magnetsensoren 21 - 26 so beschaffen und/oder angeordnet, dass ein Magnetschalter 11, 12, 33 - 36 erst dann betätigt wird, wenn eine von diesem Magnetschalter 11, 12, 33 - 36 zu überwachende Schnittstelle 30 vollständig funktionstüchtig bzw. abgesichert ist. Vorteilhafterweise weist der Magnetschalter 11, 12, 33 - 36 zur Reduzierung von Störeinflüssen durch externe Magneten eine Vertiefung 41 aufweist, in der der Magnetsensor 21 - 26 angeordnet ist und in die ein Magnet 31, 32 des Magnetschalters 11, 12, 33 - 36 eingreifen kann.

Ein besonders vorteilhaftes Verfahren zum Betreiben eines Küchengeräts 1, insbesondere elektromotorisches Küchengerät 1, vorzugsweise elektromotorische Solo- oder Universalküchenmaschine, besonders bevorzugt eines erfindungsgemäßen Küchengeräts 1, wobei das Küchengerät 1 mehrere einsetzbare Werkzeuge 7, 17, 18, 39, insbesondere ein Mixerbehälter 7, Pürier-, Misch-, Häcksel-, Knet- und/oder Schneidwerke, Schlag- bzw. Rührbesen 39, Getränkemixer, Durchlaufschnitzler, Getreidemühlen, Zitrus- bzw. Fruchtpressen und/oder Fleischwolf, aufweist, wobei eines der Werkzeuge 17, 18 von dem Küchengerät 1 aufgenommen wird, ist dadurch gekennzeichnet, dass mit Hilfe mindestens zweier Sensoren 37, insbesondere mit Hilfe von Magnetsensoren 21 - 26, der Werkzeugtyp des eingesetzten Werkzeugs 17, 18 identifiziert wird und die Betriebsweise des Küchengeräts 1, insbesondere die Geschwindigkeit und/oder Leistungsstufe eines Elektromotors 3, entsprechend der Identifizierung beeinflusst, insbesondere angepasst, wird.

Die Erfindung betrifft ein Küchengerät 1, insbesondere elektromotorisches Küchengerät 1, vorzugsweise elektromotorische Solo- oder Universalküchenmaschine, umfassend einen Einschalter 4 mit einem dem Einschalter 4 zugeordnete Sicherheitsverriegelung 5, die nur dann den Einschalter 4 entriegelt und einen Betrieb des Küchengeräts 1 zulässt, wenn das Küchengerät 1 ordnungsgemäß zusammengebaut ist, und sieht vor, dass Mittel zur Beeinflussung 43 des Magnetfelds in Abhängigkeit eines Schließzustandes des Küchengerätes 1 vorgesehen sind; sowie ein die Sicherheitsfunktion des Küchengeräts 1 unterstützendes Werkzeug (17). Die Erfindung zeichnet sich dadurch aus, dass das Küchengerät im Betrieb besonders sicher für den Benutzer des Küchengeräts 1 ist.

### Bezugszeichenliste

- 1: Küchengerät
- 2: Gerätegehäuse
- 3: Elektromotor
- 4: Einschalter
- 5: Sicherheitsverriegelung
- 6: Behälterdeckel
- 7: Mixerbehälter
- 8: Behältergriff
- 9: Gestänge
- 10: Koppelstange
- 11: erster Magnetschalter
- 12: zweiter Magnetschalter
- 13: erster Schaltschieber
- 14: zweiter Schaltschieber
- 15: erste Werkzeugkupplung
- 16: zweite Werkzeugkupplung
- 17: erstes Werkzeug
- 18: zweites Werkzeug
- 19: kupplungsseitiges Ende des Gestänges 9
- 20: deckelseitiges Ende des Gestänges 9
- 21: erster Magnetsensor
- 22: zweiter Magnetsensor
- 23: dritter Magnetsensor
- 24: vierter Magnetsensor
- 25: fünfter Magnetsensor
- 26: sechster Magnetsensor
- 27: dritte Werkzeugkupplung
- 28: Gerätesteuerung
- 29: Gerätegehäusedeckel
- 30.: Schnittstelle
- 31: erster Magnet
- 32: zweiter Magnet
- 33- 36: weitere Magnetschalter
- 37: Sensor
- 38: Zwischenraum
- 39: Rührbesen
- 40: Werkzeugtypsensor
- 41: Vertiefung
- 42: Bewegungsrichtung des Gestänges 9
- 43: Mittel zur Beeinflussung des Magnetfelds des Magneten 31,32
- 44: Nord-Süd-Richtung des Magneten 31, 32
- 45: Achse
- 46: erster Einzelmagnet
- 47: zweiter Einzelmagnet
- 48: magnetisierbares Material
- 49: Mixerbehälterabschnitt
- 50: Elektromagnet
- 51: Permanentmagnet

## Patentansprüche

1. Küchengerät (1), insbesondere elektromotorisches Küchengerät (1), vorzugsweise elektromotorische Solo- oder Universalküchenmaschine, umfassend
einen Einschalter (4) und
eine dem Einschalter (4) zugeordnete Sicherheitsverriegelung (5), die den Einschalter (4) nur dann entriegelt und einen Betrieb des Küchengeräts (1) zulässt, wenn das Küchengerät (1) ordnungsgemäß zusammengebaut ist,
wobei die Sicherheitsverriegelung (5) mindestens einen Magnetschalter (11, 12, 33 - 36) mit mindestens einem Magneten (31, 32) und mindestens einem Magnetsensor (21 - 26) aufweist, und
wobei der Magnet (31, 32) ein permanentes oder niederfrequentes Magnetfeld generiert, wobei
Mittel zur Beeinflussung (43) des Magnetfelds in Abhängigkeit eines Schließzustandes des Küchengerätes (1) vorgesehen sind,
**dadurch gekennzeichnet, dass** die Beeinflussung des Magnetfelds durch eine Drehbarkeit des Magneten (31, 32) gegeben ist.

2. Küchengerät (1) nach Anspruch 1; **dadurch gekennzeichnet, dass** das Magnetfeld des Magneten (31, 32) gedreht werden kann.

3. Küchengerät (1) nach Anspruch 1 oder 2, **dadurch gekennzeichnet, dass** die Polarität des Magneten (31, 32) umgekehrt werden kann.

4. Küchengerät nach einem der vorherigen Ansprüche, **dadurch gekennzeichnet, dass** der Magnet (31, 32) um eine Achse (45) quer zur Nord-Süd-Richtung (44) des Magneten (31, 32) drehbar und/oder verschwenkbar ist.

5. Küchengerät (1) nach Anspruch 4, **dadurch gekennzeichnet, dass** der drehbare und/oder verschwenkbare Magnet (31, 32) im Wesentlichen ortfest ist.

6. Küchengerät (1) nach einem der Ansprüche 2 bis 5, **dadurch gekennzeichnet, dass** der Magnet (31, 32) um einen Winkel von mindestens 30°, insbesondere um einen Winkel von mindestens 60°, beispielsweise um 90° oder 180°, drehbar und/oder verschenkbar ist.

7. Küchengerät (1) nach einem der vorherigen Ansprüche, **dadurch gekennzeichnet, dass** der Magnet (31, 32) eine Mehrzahl von Einzelmagneten (46, 47) umfasst.

8. Küchengerät (1) nach einem der vorherigen Ansprüche, **dadurch gekennzeichnet, dass** der Magnet (31, 32) einen Elektromagneten (50) umfasst.

9. Küchengerät (1) nach einem der vorherigen Ansprüche, **dadurch gekennzeichnet, dass** der Magnet (31, 32) einen Permanentmagneten (51) umfasst.

10. Küchengerät (1) nach einem der vorherigen Ansprüche, **dadurch gekennzeichnet, dass** der Magnetsensor (21 - 26) einen Reed-Sensor und/oder einen Hall-Sensor umfasst.

11. Küchengerät (1) nach einem der vorherigen Ansprüche, **dadurch gekennzeichnet, dass** das Küchengerät (1) mindestens ein ansteckbares Werkzeug (7, 17, 18, 39), insbesondere ein Pürier-, Misch-, Häcksel-, Knet- und/oder Schneidwerk, Schlag- bzw. Rührbesen (39), Getränkemixer, Durchlaufschnitzler, Getreidemühle, Zitrus- bzw. Fruchtpresse, Fleischwolf, und/oder ein Mixerbehälter (7), aufweist, das mit mindestens einer Werkzeugkupplung (15, 16, 27) mit dem Küchengerät (1) verbindbar ist, wobei an der Werkzeugkupplung (15, 16, 27) ein erster Magnetschalter (11) mit einem ersten Magnetsensor (21) für die Überwachung einer ordnungsgemäßen Verbindung des Werkzeugs (17, 18) mit dem Küchengerät (1) vorgesehen ist.

12. Küchengerät (1) nach Anspruch 13, **dadurch gekennzeichnet, dass** das Werkzeug (17) ein Mixerbehälter (7) ist, der einen Behälterdeckel (6) aufweist, und ein zweiter Magnetschalter (12) mit einem zweiten Magnetsensor (22) für die Überwachung eines ordnungsgemäßen Schließens des Mixerbehälters (7) mit dem Behälterdeckel (6) vorgesehen ist.

13. Küchengerät (1) nach Anspruch 14, **dadurch gekennzeichnet, dass** an dem Mixerbehälter (7), insbesondere in einem an dem Mixerbehälter (7) vorgesehenen Behältergriff (8), ein zwischen einer ersten Position und einer zweiten Position hin und her bewegliches Gestänge (9), insbesondere eine Koppelstange (10), vorgesehen ist, welches derart mit dem Behälterdeckel (6) in Eingriff gelangt, dass das Gestänge (9) bei ordnungsgemäß geschlossenem Behälterdeckel (6) die erste Position und sonst die zweite Position einnimmt, wobei mit Hilfe des Gestänges (9) der zweite Magnetschalter (12) betätigbar ist.

## Claims

1. Kitchen appliance (1), particularly kitchen appliance (1) driven by electric motor, preferably a solo or universal food processor driven by electric motor, comprising an on-switch (4) and a safety lock (5), which is associated with the on-switch (4) and which unlocks the on-switch (4) and permits operation of the kitchen appliance (1) only when the kitchen appliance (1) is correctly assembled, wherein the safety lock (5) comprises at least one magnetic switch (11, 12, 33 - 36) with at least one magnet (31, 32) and at least one magnet sensor (21 - 26), and wherein the magnet (31, 32) generates a permanent or low-frequency magnetic field, wherein means (43) for influencing the magnetic field in dependence on a closed state of the kitchen appliance (1) are provided, **characterised in that** the influencing of the magnetic field is given by a rotational capability of the magnet (31, 32).

2. Kitchen appliance (1) according to claim 1, **characterised in that** the magnetic field of the magnet (31, 32) can be rotated.

3. Kitchen appliance (1) according to claim 1 or 2, **characterised in that** the polarity of the magnet (31, 32) can be reversed.

4. Kitchen appliance according to any one of the preceding claims, **characterised in that** the magnet (31, 32) is rotatable and/or pivotable about an axis (45) transverse to the north/south direction (44) of the magnet (31, 32).

5. Kitchen appliance (1) according to claim 4, **characterised in that** the rotatable and/or pivotable magnet (31, 32) is substantially fixed in location.

6. Kitchen appliance (1) according to any one of claims 2 to 5, **characterised in that** the magnet (31, 32) is rotatable and/or pivotable through an angle of at least 30°, particularly through an angle of at least of 60°, for example through 90° or 180°.

7. Kitchen appliance (1) according to any one of the preceding claims, **characterised in that** the magnet (31, 32) comprises a plurality of individual magnets (46, 47).

8. Kitchen appliance (1) according to any one of the preceding claims, **characterised in that** the magnet (31, 32) comprises and electromagnet (50).

9. Kitchen appliance (1) according to any one of the preceding claims, **characterised in that** the magnet (31, 32) comprises a permanent magnet (51).

10. Kitchen appliance (1) according to any one of the preceding claims, **characterised in that** the magnet sensor (21 - 26) comprises a Reed sensor and/or a Hall sensor.

11. Kitchen appliance according to any one of the preceding claims, **characterised in that** the kitchen appliance (1) comprises at least one attachable tool (7, 17, 18, 39), particularly a pureeing, mixing, chopping, kneading and/or cutting tool, beater or stirrer (39), drink mixer, continuous shredder, grain mill, citrus or fruit press, mincer and/or a mixing container (7), which is connectible by at least one tool coupling (15, 16, 27) with the kitchen appliance (1), wherein a first magnetic switch (11) with a first magnetic sensor (21) for monitoring correct connection of the tool (17, 18) with the kitchen appliance (1) is provided at the tool coupling (15, 16, 27).

12. Kitchen appliance (1) according to claim 11, **characterised in that** the tool (17) is a mixing container (7) having a container lid (6), and a second magnetic switch (12) with a second magnetic sensor (22) for monitoring correct closing of the mixing container (7) by the container lid (6) is provided.

13. Kitchen appliance (1) according to claim 12, **characterised in that** a linkage (9), particularly a coupling rod (10), movable back and forth between a first position and a second position is provided at the mixing container (7), particularly in a handle (8) provided at the mixing container (7), the linkage being engageable with the container lid (6) in such a manner that the linkage (9) adopts the first position when the container lit (6) is correctly closed and otherwise the second position, wherein the second magnetic switch (12) is actuable with the help of the linkage (9).

## Revendications

1. Appareil de cuisine (1), en particulier appareil de cuisine (1) à moteur électrique, de préférence ustensile de cuisine à fonction unique ou universel, comprenant un commutateur (4) et un verrouillage de sécurité (5) affecté au commutateur (4), lequel verrouillage de sécurité ne déverrouille le commutateur (4) et ne permet un fonctionnement de l'appareil de cuisine (1) que lorsque l'appareil de cuisine (1) est assemblé correctement, dans lequel le verrouillage de sécurité (5) présente au moins un commutateur magnétique (11, 12, 33-36) avec au moins un aimant (31, 32) et au moins un capteur magnétique (21-26), et dans lequel l'aimant (31, 32) génère un champ magnétique permanent ou de basse fréquence, dans lequel des moyens d'influence (43) du champ magnétique en fonction d'un état de fermeture de l'appareil de cuisine (1) sont prévus, **caractérisé en ce que** l'influence du champ magnétique est donnée par une rotabilité de l'aimant (31, 32).

2. Appareil de cuisine (1) selon la revendication 1, **caractérisé en ce que** le champ magnétique de l'aimant (31, 32) peut être tourné.

3. Appareil de cuisine (1) selon la revendication 1 ou 2, **caractérisé en ce que** la polarité de l'aimant (31, 32) peut être inversée.

4. Appareil de cuisine selon l'une des revendications précédentes, **caractérisé en ce que** l'aimant (31, 32) est rotatif et/ou peut être basculé autour d'un axe (45) transversal à la direction nord-sud (44) de l'aimant (31, 32).

5. Appareil de cuisine (1) selon la revendication 4, **caractérisé en ce que** l'aimant (31, 32) rotatif et/ou qui peut être basculé est sensiblement fixe.

6. Appareil de cuisine (1) selon l'une des revendications 2 à 5, **caractérisé en ce que** l'aimant (31, 32) est rotatif et/ou peut être basculé d'un angle d'au moins 30°, en particulier d'un angle d'au moins 60°, par exemple de 90° ou de 180°.

7. Appareil de cuisine (1) selon l'une des revendications précédentes, **caractérisé en ce que** l'aimant (31, 32) comprend une pluralité d'aimants individuels (46, 47).

8. Appareil de cuisine (1) selon l'une des revendications précédentes, **caractérisé en ce que** l'aimant (31, 32) comprend un électroaimant (50).

9. Appareil de cuisine (1) selon l'une des revendications précédentes, **caractérisé en ce que** l'aimant (31, 32) comprend un aimant permanent (51).

10. Appareil de cuisine (1) selon l'une des revendications précédentes, **caractérisé en ce que** le capteur magnétique (21-26) comprend un capteur Reed et/ou un capteur à effet Hall.

11. Appareil de cuisine (1) selon l'une des revendications précédentes, **caractérisé en ce que** l'appareil de cuisine (1) présente au moins un outil amovible (7, 17, 18, 39), en particulier un accessoire de réduction en purée, de mélangeage, de hachage, de pétrissage et/ou de tranchage, un fouet (39), un mixeur à boissons, un hachoir par passage, un moulin à grains, un presse agrumes resp. un presse fruits, un hache-viande et/ou un récipient de mixeur (7) qui peut être relié à l'appareil de cuisine (1) avec au moins un accouplement d'outil (15, 16, 27), dans lequel un premier commutateur magnétique (11) avec un premier capteur magnétique (21) pour la surveillance d'un lien correct de l'outil (17, 18) avec l'appareil de cuisine (1) est prévu sur l'accouplement d'outil (15, 16, 27).

12. Appareil de cuisine (1) selon la revendication 13, **caractérisé en ce que** l'outil (17) est un récipient de mixeur (7) qui présente un couvercle de récipient (6), et **en ce qu'**un deuxième commutateur magnétique (12) avec un deuxième capteur magnétique (22) pour la surveillance d'une fermeture correcte du récipient de mixeur (7) avec le couvercle de récipient (6) est prévu.

13. Appareil de cuisine (1) selon la revendication 14, **caractérisé en ce que**, sur le récipient de mixeur (7), en particulier dans une poignée de récipient (8) prévue sur le récipient de mixeur (7), une tringlerie mobile (9) déplaçable entre une première position et une deuxième position, en particulier une tringle d'accouplement (10), est prévue, laquelle s'engage de telle sorte dans le couvercle de récipient (6) que la tringlerie (9), lorsque le couvercle de récipient (6) est correctement fermé, adopte la première position et sinon la deuxième position, dans lequel le deuxième commutateur magnétique (12) peut être actionné par la tringlerie (9).
